# EUROPÄISCHE PATENTSCHRIFT

(11) **EP 1 159 519 B1**
(45) Veröffentlichungstag und Bekanntmachung des Hinweises auf die Patenterteilung: **23.02.2005**
(21) Anmeldenummer: 00993730.1
(22) Anmeldetag: 21.11.2000
(51) Int. Cl.: F01N 11/00, F01N 3/08

(54) **VERFAHREN ZUM BETREIBEN EINES SPEICHERKATALYSATORS EINER BRENNKRAFTMASCHINE**
METHOD FOR OPERATING A THREE-WAY CATALYST OF AN INTERNAL COMBUSTION ENGINE
PROCEDE POUR FAIRE FONCTIONNER UN CATALYSEUR ACCUMULATEUR D'UN MOTEUR A COMBUSTION INTERNE

(30) Priorität: 31.12.1999 DE 19963924
(43) Veröffentlichungstag der Anmeldung: 05.12.2001
(73) Patentinhaber: ROBERT BOSCH GMBH, 70442 Stuttgart (DE)
(72) Erfinder: SCHNAIBEL, Eberhard, 71282 Hemmingen (DE); KORING, Andreas, 71636 Ludwigsburg (DE); BELLMANN, Holger, 71636 Ludwigsburg (DE); WAHL, Thomas, 75172 Pforzheim (DE); BLUMENSTOCK, Andreas, 71638 Ludwigsburg (DE); WINKLER, Klaus, 71277 Rutesheim (DE); STANGLMEIER, Frank, 71696 Möglingen (DE); SCHUMANN, Bernd, 71277 Rutesheim (DE)
(86) Internationale Anmeldenummer: PCT/DE2000/004102
(87) Internationale Veröffentlichungsnummer: WO 2001/049990

(56) Entgegenhaltungen:
- EP-A- 0 943 792
- US-A- 5 713 198
- PATENT ABSTRACTS OF JAPAN vol. 1999, no. 13, 30. November 1999 (1999-11-30) & JP 11 229859 A (MITSUBISHI MOTORS CORP), 24. August 1999 (1999-08-24)
- PATENT ABSTRACTS OF JAPAN vol. 1999, no. 13, 30. November 1999 (1999-11-30) & JP 11 229864 A (MITSUBISHI MOTORS CORP), 24. August 1999 (1999-08-24)

## Beschreibung

### Stand der Technik

Die Erfindung betrifft ein Verfahren zum Betreiben eines Speicherkatalysators einer Brennkraftmaschine insbesondere eines Kraftfahrzeugs, bei dem der Speicherkatalysator mit einem Dreiwegekatalysator gekoppelt ist, und bei dem der Speicherkatalysator mit Stickoxiden be- und entladen wird. Ebenfalls betrifft die Erfindung ein Steuergerät für eine Brennkraftmaschine insbesondere eines Kraftfahrzeugs sowie eine Brennkraftmaschine insbesondere für ein Kraftfahrzeug.

Ein Verfahren, ein Steuergerät und eine Brennkraftmaschine der eingangs genannten Art ist beispielsweise von einer sogenannten Benzin-Direkteinspritzung bekannt. Dort wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Insbesondere zur Ausführung des Schichtbetriebs ist es erforderlich, dass ein Speicherkatalysator vorhanden ist, mit dem entstehende Stickoxide zwischengespeichert werden können, um sie während eines nachfolgenden Homogenbetriebs zu reduzieren. Dieser Speicherkatalysator wird im Schichtbetrieb mit den Stickoxiden beladen und im Homogenbetrieb wieder entladen. Dieses Be- und Entladen, thermische Beanspruchungen und Vergiftungen führen zu einer Alterung des Speicherkatalysators. Zur Überwachung dieser Alterung werden Diagnoseverfahren für den Speicherkatalysator durchgeführt.

Aus der US 5,713,198 ist ein Abgassystem einer Brennkraftmaschine bekannt, bei dem die Rate einer Temperaturerhöhung des Abgasstroms dazu verwendet wird, den Beladungszustand eines Katalysators zu bestimmen. Die Konvertierungsfähigkeit eines Speicherkatalysators bei einer Temperatur zu diagnostizieren, bei der ein zugehöriger 3-Wege-Katalysator noch nicht arbeitet, kann dieser Druckschrift nicht entnommen werden. Ebenso wenig kann dieses Merkmal der EP 0 943 792 A2 entnommen werden.

### Aufgabe und Vorteile der Erfindung

Aufgabe der Erfindung ist es, ein Verfahren zum Betreiben eines Speicherkatalysators einer Brennkraftmaschine zu schaffen, mit dem die Alterung des Speicherkatalysators genau überwacht werden kann.

Diese Aufgabe wird bei einem Verfahren der eingangs genannten Art erfindungsgemäß dadurch gelöst, dass eine Diagnose des Speicherkatalysators unterhalb einer Temperatur, bei der der Dreiwegekatalysator noch nicht arbeitet, und oberhalb einer Temperatur durchgeführt wird, bei der der Speicherkatalysator arbeitet. Bei einem Steuergerät und einer Brennkraftmaschine der jeweils eingangs genannten Art wird die Aufgabe entsprechend gelöst.

Wird die Diagnose bei einer Temperatur z.B. unterhalb von etwa 250 Grad durchgeführt, so bringt dies den Vorteil mit sich, dass der Dreiwegekatalysator noch keinerlei Einfluss auf die Diagnose des Speicherkatalysators hat, da der Arbeitsbereich des Dreiwegekatalysators noch nicht erreicht ist. Das Diagnoseergebnis für den Speicherkatalysator wird somit nicht verfälscht, sondern bezieht sich mit hoher Genauigkeit allein auf den Speicherkatalysator.

Durch die Diagnose des Speicherkatalysators bei einer Temperatur oberhalb der Temperatur, bei der der Speicherkatalysator arbeitet, wird gewährleistet, dass der Speicherkatalysator sich in seinem eigenen Arbeitsbereich befindet und somit die Diagnose des Speicherkatalysators sicher und genau durchgeführt werden kann.

Besonders vorteilhaft ist es, wenn die Temperatur des Speicherkatalysators von einem Temperatursensor gemessen wird. Damit kann der vorstehende Temperaturbereich besonders einfach ermittelt und überwacht werden.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory oder ein Flash-Memory.

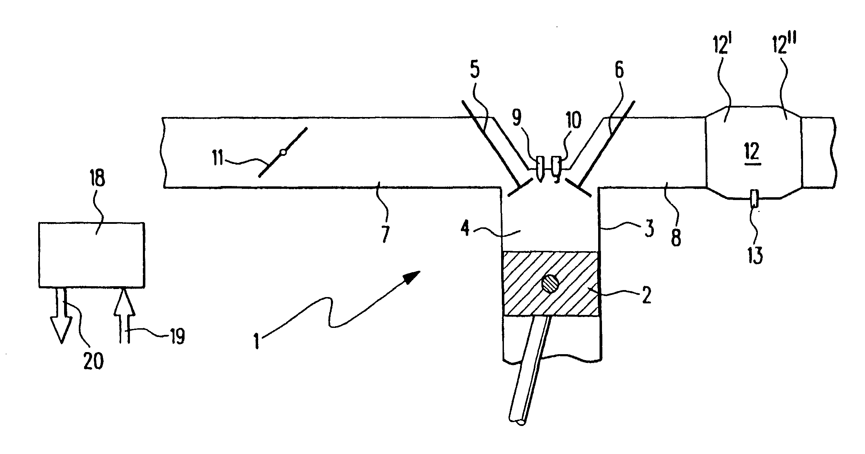

Weitere Merkmale, Anwendungsmöglichkeiten und Vorteile der Erfindung ergeben sich aus der nachfolgenden Beschreibung ihrer Zusammenfassung in den Patentansprüchen oder deren Rückbeziehung sowie unabhängig von ihrer Formulierung bzw. Darstellung in der Beschreibung bzw. in der Zeichnung.

### Ausführungsbeispiele der Erfindung

Die einzige Figur der Zeichnung zeigt eine schematische Darstellung eines Ausführungsbeispiels einer erfindungsgemäßen Brennkraftmaschine.

In der Figur ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Bei dem Katalysator 12 handelt es sich um einen Speicherkatalysator 12', der mit einem Dreiwegekatalysator 12'' gekoppelt ist. Der Katalysator 12 ist damit unter anderem dazu vorgesehen, Stickoxide (NOx) zwischenzuspeichern. In dem Katalysator 12 ist ein Temperatursensor 13 vorgesehen, mit dem die Temperatur des durch den Speicherkatalysator 12' strömenden Abgases und/oder die Temperatur des Speicherkatalysators 12' selbst gemessen werden kann.

Ein Steuergerät 18 ist von Eingangssignalen 19 beaufschlagt, die mittels Sensoren gemessene Betriebsgrößen der Brennkraftmaschine 1 darstellen. Das Steuergerät 18 erzeugt Ausgangssignale 20, mit denen über Aktoren bzw. Steller das Verhalten der Brennkraftmaschine 1 beeinflußt werden kann. Unter anderem ist das Steuergerät 18 dazu vorgesehen, die Betriebsgrößen der Brennkraftmaschine 1 zu steuern und/oder zu regeln. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so daß der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im wesentlichen ist der Schichtbetrieb für den Leerlaufbetrieb und den Teillastbetrieb der Brennkraftmaschine 1 vorgesehen.

Der Speicherkatalysator 12' des Katalysators 12 wird während des Schichtbetriebs mit Stickoxiden beladen. In einem nachfolgenden Homogenbetrieb wird der Speicherkatalysator 12' wieder entladen und die Stickoxide werden von dem Dreiwegekatalysator 12'' reduziert.

Der Speicherkatalysator 12' nimmt während seiner fortlaufenden Be- und Entladung mit Stickoxiden mit der Zeit Schwefel auf. Dies führt zu einer Einschränkung der Speicherfähigkeit des Speicherkatalysators 12', die nachfolgend als Alterung bezeichnet wird. Zur Erkennung der Alterung des Speicherkatalysators 12' werden Diagnoseverfahren durchgeführt.

Der Speicherkatalysator 12' arbeitet bei Temperaturen oberhalb von etwa 200 Grad Celcius. Der Dreiwegekatalysator 12'' arbeitet bei Temperaturen oberhalb von etwa 250 Grad Celcius.

Würde man den Speicherkatalysator 12' mit irgendwelchen Diagnoseverfahren oberhalb von 250 Grad überprüfen, so hätte dies zu Folge, daß dabei immer Einflüsse des Dreiwegekatalysators 12" vorhanden wären. Insbesondere würde in diesem Fall die Fähigkeit des Dreiwegekatalysators 12'' zur Speicherung von Sauerstoff eine Rolle spielen. Dies würde die Diagnose des Speicherkatalysators 12' verfälschen.

Erfindungsgemäß werden die Diagnoseverfahren bei einer Temperatur angewendet, die oberhalb von 200 Grad Celsius, aber unterhalb von 250 Celsius Grad liegt. Das Diagnoseverfahren wird also bei einer Temperatur durchgeführt, die unterhalb einer Temperatur liegt, bei der der Dreiwegekatalysator 12'' noch nicht arbeitet. Des weiteren wird das Diagnoseverfahren bei einer Temperatur durchgeführt, die oberhalb einer Temperatur liegt, bei der der Speicherkatalysator 12' arbeitet. Damit befindet sich der Speicherkatalysator 12' in seinem Arbeitsbereich, der Dreiwegekatalysator 12'' jedoch noch nicht. Damit hat der Dreiwegekatalysator 12'' keinerlei Einfluß auf die Diagnose des Speicherkatalysators 12'.

Der vorstehend genannte Temperaturbereich kann mit Hilfe des Temperatursensors 13 ermittelt und gegebenenfalls überwacht werden. Das vorstehend beschriebene Verfahren, wie auch das genannte Diagnoseverfahren kann von dem Steuergerät 18 durchgeführt werden.

Es versteht sich, daß die angegebenen Temperaturen abhängig sind von dem jeweils verwendeten Katalysator 12. Insoweit kann es erforderlich sein, die genannten Temperaturen entsprechend zu verändern.

## Patentansprüche

1. Verfahren zum Betreiben eines Speicherkatalysators (12') einer Brennkraftmaschine (1) insbesondere eines Kraftfahrzeugs, bei dem der Speicherkatalysator (12') mit einem Dreiwegekatalysator (12'') gekoppelt ist, und bei dem der Speicherkatalysator (12') mit Stickoxiden be- und entladen wird, **dadurch gekennzeichnet, dass** eine Diagnose des Speicherkatalysators (12') unterhalb einer Temperatur, bei der der Dreiwegekatalysator (12'') noch nicht arbeitet, und oberhalb einer Temperatur durchgeführt wird, bei der der Speicherkatalysator (12') arbeitet.

2. Verfahren nach einem der Ansprüche 1, **dadurch gekennzeichnet, dass** die Temperatur des Speicherkatalysators (12') von einem Temperatursensor (13) gemessen wird.

3. Steuerelement, insbesondere Flash-Memory, für ein Steuergerät (18) einer Brennkraftmaschine (1) insbesondere eines Kraftfahrzeugs, auf dem ein Programm abgespeichert ist, das auf einem Rechengerät, insbesondere auf einem Mikroprozessor, ablauffähig und zur Anwendung bei einem Verfahren nach Anspruch 1 oder 2 geeignet ist.

4. Steuergerät (18) für eine Brennkraftmaschine (1) insbesondere eines Kraftfahrzeugs, wobei die Brennkraftmaschine (1) einen Dreiwegekatalysator (12'') und einen Speicherkatalysator (12') aufweist, der mit Stickoxiden be- und entladen werden kann, **dadurch gekennzeichnet, dass** das Steuergerät (18) eine Diagnose des Speicherkatalysators (12') unterhalb einer Temperatur, bei der der Dreiwegekatalysator (12") noch nicht arbeitet, und oberhalb einer Temperatur durchführt, bei der der Speicherkatalysator (12') arbeitet.

5. Brennkraftmaschine (1) insbesondere für ein Kraftfahrzeug mit einem Dreiwegekatalysator (12'') und einem Speicherkatalysator (12'), der mit Stickoxiden beund entladen werden kann, und mit einem Steuergerät (18), **dadurch gekennzeichnet, dass** das Steuergerät (18) eine Diagnose des Speicherkatalysators (12') unterhalb einer Temperatur, bei der der Dreiwegekatalysator (12'') noch nicht arbeitet, und oberhalb einer Temperatur durchführt, bei der der Speicherkatalysator (12') arbeitet.

## Claims

1. Method for operating a storage catalytic converter (12') of an internal combustion engine (1), in particular of a motor vehicle, in which the storage catalytic converter (12') is coupled to a three-way catalytic converter (12"), and in which the storage catalytic converter (12') is loaded with nitrogen oxides and then unloaded, **characterized in that** a diagnosis of the storage catalytic converter (12') is carried out below a temperature at which the 3-way catalytic converter (12") starts to work and above a temperature at which the storage catalytic converter (12') starts to work.

2. Method according to Claim 1, **characterized in that** the temperature of the storage catalytic converter (12') is measured by a temperature sensor (13).

3. Control element, in particular flash memory, for a control unit (18) of an internal combustion engine (1), in particular of a motor vehicle, on which is stored a program which can run on a computer unit, in particular on a microprocessor, and is suitable for use in a method according to Claim 1 or 2.

4. Control unit (18) for an internal combustion engine (1), in particular of a motor vehicle, the internal combustion engine (1) having a three-way catalytic converter (12") and a storage catalytic converter (12'), which can be loaded with nitrogen oxides and then unloaded, **characterized in that** the control unit (18) carries out a diagnosis of the storage catalytic converter (12') below a temperature at which the three-way catalytic converter (12") starts to work and above a temperature at which the storage catalytic converter (12') starts to work.

5. Internal combustion engine (1), in particular for a motor vehicle, having a three-way catalytic converter (12") and a storage catalytic converter (12'), which can be loaded with nitrogen oxides and can be unloaded, and having a control unit (18), **characterized in that** the control unit (18) carries out a diagnosis of the storage catalytic converter (12') below a temperature at which the three-way catalytic converter (12") starts to work and above a temperature at which the storage catalytic converter (12') starts to work.

## Revendications

1. Procédé de gestion d'un catalyseur accumulateur (12') d'un moteur thermique (1) notamment d'un véhicule selon lequel le catalyseur accumulateur (12') est couplé à un catalyseur à trois voies (12") et le catalyseur accumulateur (12') se charge et se décharge en oxydes d'azote,
**caractérisé en ce qu'**
on effectue un diagnostic du catalyseur accumulateur (12') en dessous d'une température à laquelle le catalyseur à trois voies (12") ne fonctionne pas encore et au-dessus d'une température à laquelle le catalyseur accumulateur (12') fonctionne.

2. Procédé selon la revendication 1,
**caractérisé en ce que**
la température du catalyseur accumulateur (12') est mesurée par un capteur de température (13).

3. Elément de commande notamment mémoire flasch pour un appareil de commande (12) d'un moteur thermique (1) notamment d'un véhicule contenant un programme qui peut être exécuté par un appareil de calcul notamment un microprocesseur, et met en oeuvre le procédé selon l'une des revendications 1 ou 2.

4. Appareil de commande (18) pour un moteur thermique (1) notamment celui d'un véhicule automobile, le moteur thermique (1) ayant un catalyseur à trois voies (12") et un catalyseur accumulateur (12') qui se charge et se décharge en oxydes d'azote
**caractérisé en ce que**
l'appareil de commande (18) effectue un diagnostic du catalyseur accumulateur (12') en dessous d'une température à laquelle le catalyseur à trois voies (12") ne fonctionne pas encore et au-dessus d'une température à laquelle le catalyseur accumulateur (12') fonctionne.

5. Moteur thermique (1) notamment pour un véhicule comportant un catalyseur à trois voies (12") et un catalyseur accumulateur (12') qui se charge et se décharge d'oxydes d'azote ainsi qu'un appareil de commande (18),
**caractérisé en ce que**
l'appareil de commande (18) effectue un diagnostic du catalyseur accumulateur (12') en dessous d'une température à laquelle le catalyseur à trois voies (12") ne fonctionne pas encore et au-dessus d'une température à laquelle le catalyseur accumulateur (12') fonctionne.
